# EUROPÄISCHE PATENTSCHRIFT

(11) **EP 0 895 438 B1**
(45) Veröffentlichungstag und Bekanntmachung des Hinweises auf die Patenterteilung: **13.06.2007**
(21) Anmeldenummer: 98112854.9
(22) Anmeldetag: 11.07.1998
(51) Int. Cl.: H04Q 11/04

(54) **Schaltungsanordnung für eine Netzabschlusseinheit**
Circuit arrangement for a network termination unit
Circuit pour unité de terminaison de réseau

(30) Priorität: 01.08.1997 DE 19733250
(43) Veröffentlichungstag der Anmeldung: 03.02.1999
(73) Patentinhaber: Aastra DeTeWe GmbH, 10997 Berlin (DE)
(72) Erfinder: Neuhaus, Hans-Jürgen, 12161 Berlin (DE)

(56) Entgegenhaltungen:
- EP-A- 0 560 236
- EP-A- 0 658 031
- EP-A- 0 767 573
- WO-A-96/11543
- DE-U1- 9 218 994

## Beschreibung

Die Erfindung bezieht sich auf eine Schaltungsanordnung für eine Netzabschlußeinheit zum Ein- und Auskoppeln von Nutzsignalen und der Speisung von Endeinrichtungen an Vier-Draht-Schnittstellen in digital gesteuerten Kommunikationsnetzen.

Beim digitalen Nachrichtennetz, z. B. dem diensteintegrierenden digitalen Nachrichtennetz (ISDN), sind zwischen der digitalen Vermittlung und dem Teilnehmeranschluß physikalische Schnittstellen vorgesehen. Diese Benutzer-Netz-Schnittstellen zwischen der digitalen Vermittlung und einem Teilnehmeranschluß (Zwei-Draht-Schnittstelle) einerseits sowie einem Netzabschluß der digitalen Vermittlung und einem Teilnehmeranschluß (Zwei- bzw. Vier-Drath-Schnittstelle) andererseits, dienen auch der Energieübertragung an die Teilnehmeranschlüsse. Solche Anordnung ist Z.B. offenbart im Dokument EP 0 767 573 A. Hierzu sind zwei Zusatzadern vorgesehen, oder die Speisung wird über die Adern übertragen, die auch der Informationsübertragung dienen. Im letzten Fall sind Phantomschaltungen für die Speisung vorhanden. (P. Bocker: ISDN, das diensteintegrierende digitalen Nachrichtennetz, Springer-Verlag, 1986, S. 75.)

Allgemein wird in digitalen Telekommunikationsgeräten die Ein- und Auskopplung der Sende- und Empfangssignale am Sₒ-Bus durch einen Übertrager vorgenommen, wobei bei Bedarf an einer solchen Sₒ-Übertragerschnittstelle auch eine begrenzte Speiseleistung entnehmbar ist.

Die Übertrager sind relativ unwirtschaftlich hinsichtlich des Raumbedarfes und des finanziellen Aufwandes gegenüber anderen elektrischen Bauelementen.

Der Erfindung lag die Aufgabe zugrunde, den bekannten Schnittstellenübertrager hinsichtlich der Signalein- und -auskopplung und der Speisung durch eine elektronische Lösung zu ersetzen.

Diese Aufgabe ist durch die Erfindung gelöst, wie sie im ersten Patentanspruch dargelegt ist. Weitere vorteilhafte Maßnahmen sind Gegenstand der Unteransprüche.

Der Vorteil der Erfindung besteht im wesentlichen in der Kostenersparnis bei entsprechender Schaltungsauslegung unter Verwendung von Standardelementen sowie eines geringeren Raumbedarfs gegenüber der Verwendung eines Übertragers.

Die Erfindung ist für Vier-Draht-Schnittstellen mit Phantomspeisung verwendbar. Sie wird nachfolgend anhand einer aus drei Figuren bestehenden Zeichnung am Beispiel von Sₒ-Schaltungsanordnungen näher beschrieben. In der Zeichnung zeigen die
- Fig. 1: eine Schaltungsanordnung einer herkömmlichen Sₒ-Schnittstelle mit Übertragern, die
- Fig. 2: die Schaltungsanordnung einer übertragerlosen elektronischen Sₒ-Schnittstelle gemäß der Erfindung und die
- Fig. 3: die Leitungstreiberschaltung.

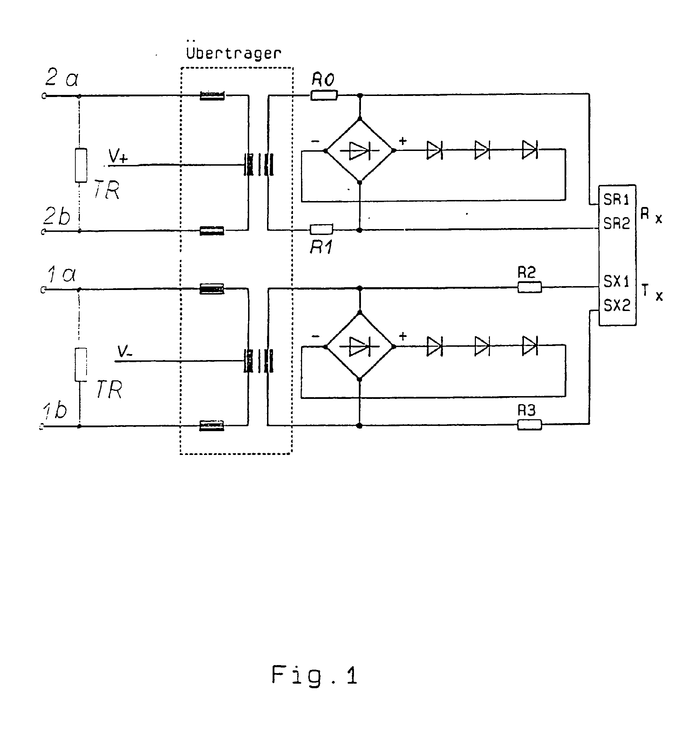

Die herkömmliche Sₒ-Schnittstelle (Fig. 1) weist einen Übertrager auf, der ggf. über integrierte EMV-Drosseln für die elektromagnetische Verträglichkeit verfügt. Weiterhin sind eine Reihe von Dioden als Überspannungsschutz vorgesehen und Anpassungen bezüglich des Pegels und der Impedanz R0...R3 in Senderichtung SX1, SX2 und Empfangsrichtung SR1, SR2 vorhanden. Die Speisespannung V+ und V- wird am Übertrager an der Schnittstelle zum Sₒ-Bus eingekoppelt. Schutzmaßnahmen gegen Überstrom müssen vom Speisespannungsmodul realisiert werden.

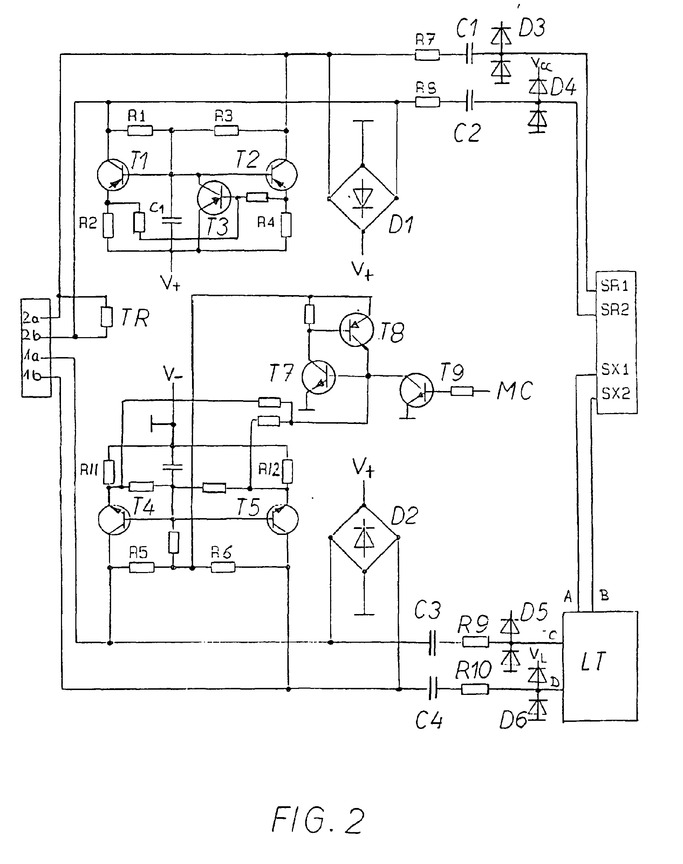

Die elektronische Lösung für die Sₒ-Schnittstelle ist in der Figur 2 dargestellt. Die Schnittstelle zum Sₒ-Bus ist der Vier-Draht-Anschluß 1a, 1b, 2a, 2b. Die Empfangsschnittstelle SR1, SR2 und die Sendeschnittstelle SX1, SX2 entsprechen denen der Figur 1, jedoch ist die Sendeschnittstelle mit einem Leitungstreiber LT verbunden.

Die Transistoren T1, T2 bilden mit ihrer Zusatzbeschaltung ein elektronisches Drosselpaar zur Einkopplung des positiven Speisepotentials V+. Durch die identische Beschaltung der Transistoren T1, T2 sowie die Verbindung der beiden Basisanschlüsse bei getrennten, jedoch gleich großen Emitterwiderständen R2, R4 wird automatisch eine Symmetrierung der Stromeinspeisung in die beiden Empfangsleitungen des Sₒ-Busses erzielt. Zusätzlich sind die Transistoren T1, T2 vom gleichen Typ und der gleichen Stromverstärkungsgruppe. Durch diese Maßnahmen wird eine Gleichstromsättigung des Übertragers auf der Endgeräteseite vermieden. Die beiden elektronischen Drosseln sind bezüglich des Nutzsignals hochohmig, indem sie so dimensioniert sind, daß bei der höchsten auftretenden Signalamplitude die beiden Transistoren T1, T2 nicht in die Sättigung gesteuert werden.

Der Transistor T3 dient im Zusammenhang mit den beiden Widerständen an seinem Basisanschluß der Strombegrenzung der Speiseschaltung und somit als Schutz gegen kurzzeitigen Überstrom.

Aufgrund des Spannungsabfalls an den elektronischen Drosseln ist der Wirkungsgrad der elektronischen Ersatzschaltung geringer als der Wirkungsgrad der Schaltungsanordnung mit Übertragern. Bei Bedarf kann der Spannungsabfall durch Hinzufügen von Antisättigungssteuerschaltugnen reduziert werden (DE 38 26 765 C2).

Zur Einkopplung des negativen Speisepotentials V- dient das zu den Transistoren T1, T2 komplementäre elektronische Drosselpaar mit den Transistoren T4, T5. Die Funktion ist identisch der oben beschriebenen Ausführung.

Als Überspannungsschutz dienen die Brückengleichrichter D1, D2 als Grobschutz. Die Leitung zum Sₒ-Bus ist in Empfangsrichtung 2a, 2b mit einem Widerstand TR abgeschlossen. Der Abschlußwiderstand TR ist allgemein von der Größe 100 Ohm. Die Auskopplung der Empfangssignale erfolgt zur galvanischen Trennung mittels der Kondensatoren C1 und C2.

Die Doppeldioden D3, D4 schützen im Zusammenhang mit den Widerständen R7, R8 die an den Übergabepunkten SR1, SR2 folgende Empfangsschaltung gegen Überspannung (Feinschutz). In gleicher Weise schützen die Doppeldioden D5, D6 mit den Widerständen R9, R10 den Leitungstreiber LT gegen Überspannung.

Zusätzlich zu der erwähnten Strombegrenzerschaltung mit dem Transistor T3 ist ein auf die Transistoren T4, T5 wirkender Speiseabschalter T7, T8 vorgesehen. Dadurch kann die Verlustleistung an den speisenden Transistoren auch bei andauerndem Überstrom gering gehalten werden.

Kern des Speiseabschalters sind die zu einem diskreten "Thyristor" geschalteten Transistoren T7 und T8.

Überschreitet die an den Widerständen R11 und R12 abgegriffene Spannung die Basis-Emitter-Schleusenspannung des Transistors T7, so zündet der "Thyristor". Hierdurch werden die Transistoren T4 und T5 gesperrt und somit die Speisung der Schnittstelle abgeschaltet. Durch zeitgesteuertes, pulsartiges Einschalten des Transistors T9, z. B. durch einen Mikrorechner MC, wird der "Thyristor" gelöscht und somit die Speisung wieder eingeschaltet. Besteht nach dem Löschen weiterhin ein Überstrom, so wird der "Thyristor" sofort wieder gezündet. Je länger der Zeitraum zwischen zwei Einschaltversuchen gewählt wird, umso geringer ist die Verlustleistungsbelastung der Speisetransistoren.

Das Einkoppeln der Sendesignale geschieht zur galvanischen Trennung über die Kondensatoren C3 und C4. Der Leitungsabschluß wird durch die Widerstände R9 und R10 gebildet.

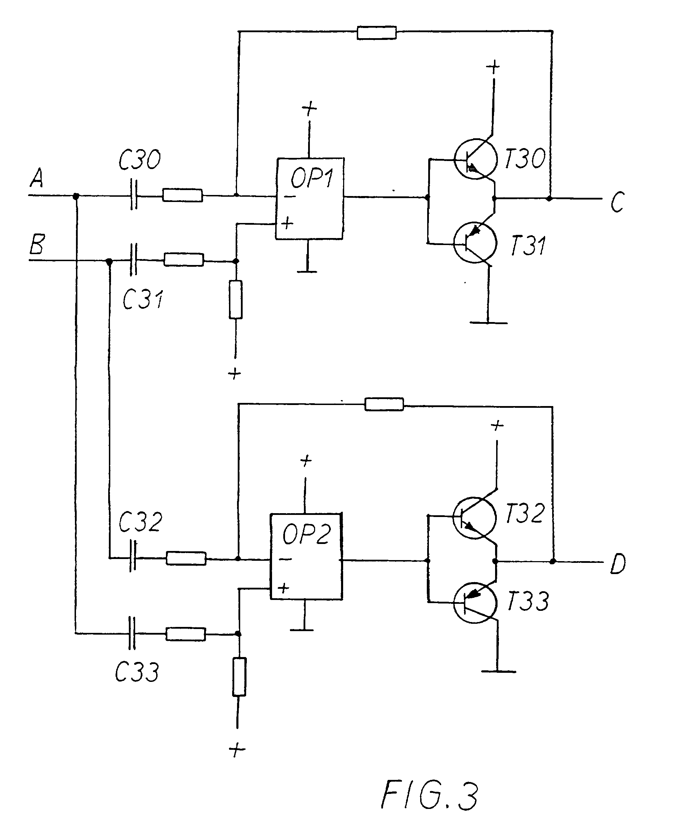

Da der Sₒ-Bus in Senderichtung einen bestimmten Pegel aufweisen muß, ist bei Fortfall bzw. Ersatz eines Übertragers mit einem Übersetzungsverhältnis, das ungleich eins beträgt, ein aktiver Leitungstreiber LT notwendig, der den erforderlichen Signalpegel auf der Leitung zur Verfügung stellt. Zur Verbesserung des EMV-Verhaltens muß die Schaltung symmetrisch ausgeführt sein. Kern des Leitungstreibers LT (Fig. 3) ist je Sendeader ein Operationsverstärker OP1, OP2 mit nachgeschalteter Gegentaktstufe, bestehend aus den Transistoren T30 bis T33 in Brückenschaltung, der an den Punkten A bis D in Figur 2 eingeschleift ist. Die Operationsverstärker OP1, OP2 sind als symmetrische Differenzverstärker geschaltet. Hierbei sind die Gegentaktendstufen in die Gegenkopplung zur Reduzierung der Übernahmeverzerrungen einbezogen. Die Sendesignale des Sₒ-Treiberbausteins werden an den Punkten A, B über die Koppelkondensatoren C30 bis C33 dem Operationsverstärker OP1 nicht invertiert und dem Operationsverstärker OP2 invertiert zugeführt. Hierdurch wird am Ausgang der Treiberschaltung an den Punkten C, D das geforderte symmetrische Signal erzeugt.

## Patentansprüche

1. Schaltungsanordnung für eine Netzabschlußeinheit zum Ein- und Auskoppeln von Nutzsignalen und zur Speisung von Endeinrichtungen an Vier-Draht-Schnittstellen in digital gesteuerten Kommunikationsnetzen, mit zwei identisch geschalteten elektronischen Drosselpaaren (T1, T2; T4, T5), die über gleich große Widerstände (R2, R4; R11, R12) an den Emittern eine symmetrische Stromeinspeisung in die Leitungen (1a, 1b; 2a, 2b) der Vier-Draht-Schnittstelle bewirken, wobei ein Schutz der Speiseschaltung gegen kurzzeitigen Überstrom durch eine Strombegrenzung (T3) bzw. gegen andauernden Überstrom durch einen Speiseabschalter (T7, T8) mit zeitgesteuertem Speiseeinschalter (T9) an den Basen der Transistoren der elektronischen Drosselpaare (T1, T2; T4, T5) erzielt ist und mit einem aktiven Leitungstreiber (LT) zum Erreichen des erforderlichen Sendepegels auf den Leitungen.

2. Schaltungsanordnung nach Anspruch 1, **gekennzeichnet durch** kapazitive Ein- und Auskopplung (C1, C2; C3, C4) der Nutzsignale zur galvanischen Trennung.

3. Schaltungsanordnung nach Anspruch 1, **gekennzeichnet durch** Brückengleichrichter (D1, D2) und Doppeldioden (D3 bis D6) als Überspannungsschutz.

4. Schaltungsanordnung nach Anspruch 1, **gekennzeichnet durch** Operationsverstärker (OP1, OP2) mit nachgeschalteten Gegentaktendstufen (T30 bis T33) in Brückenschaltung als Leitungstreiber (LT).

## Claims

1. Circuit arrangement for a network terminating unit for coupling useful signals in and out and feeding terminal devices at four-wire interfaces in digitally controlled communication networks, comprising two identically connected electronic pairs of inductors (T1, T2; T4, T5) which, via resistors of equal sizes (R2, R4; R11; R12) at the emitters produce balanced feeding of current into the lines (1a, 1b; 2a, 2b) of the four-wire interface, a protection of the feed circuit against short-time overcurrent being achieved by current limiting (T3) or against continuing overcurrent being achieved by a feed disconnector (T7, T8) with time-controlled feed switch (T9) at the bases of the transistors of the electronic pairs of inductors (T1, T2; T4, T5) and comprising an active line driver (LT) for achieving the required transmitting level on the lines.

2. Circuit arrangement according to Claim 1, **characterized by** capacitive coupling-in and -out (C1, C2; C3, C4) of the useful signals to provide galvanic isolation.

3. Circuit arrangement according to Claim 1, **characterized by** bridge rectifiers (D1, D2) and dual diodes (D3 to D6) as overvoltage protection.

4. Circuit arrangement according to Claim 1, **characterized by** operational amplifiers (OP1, OP2) followed by bridge-connected push-pull output stages (T30 to T33) as line driver (LT).

## Revendications

1. Arrangement de circuit pour une unité de terminaison de réseau destiné à injecter et extraire des signaux utiles et à l'alimentation de terminaux sur des interfaces à double paire dans les systèmes de communication à commande numérique, comprenant deux paires de bobines d'arrêt électroniques (T1, T2 ; T4, T5) branchées de manière identique et qui, par le biais de résistances (R2, R4 ; R11, R12) de même valeur au niveau des émetteurs, produisent une injection de courant symétrique dans les lignes (1a, 1b ; 2a, 2b) de l'interface à double paire, une protection du circuit d'alimentation contre les surintensités de courte durée étant obtenue par une limitation de courant (T3) ou contre les surintensités persistantes par un interrupteur d'alimentation (T7, T8) avec commutateur de mise en circuit temporisé (T9) sur les bases des transistors des paires de bobines d'arrêt électroniques (T1, T2 ; T4, T5) et comprenant un amplificateur de ligne actif (LT) pour atteindre le niveau de signal nécessaire sur les lignes.

2. Arrangement de circuit selon la revendication 1, **caractérisé par** une injection et une extraction capacitive (C1, C2 ; C3, C4) des signaux utiles en vue de l'isolation galvanique.

3. Arrangement de circuit selon la revendication 1, **caractérisé par** des redresseurs en pont (D1, D2) et des doubles diodes (D3 à D6) faisant office de protection contre les surtensions.

4. Arrangement de circuit selon la revendication 1, **caractérisé par** des amplificateurs opérationnels (OP1, OP2) après lesquels sont branchés des étages symétriques (T30 à T33) branchés en pont faisant office d'amplificateur de ligne (LT).
